# DEMANDE DE BREVET EUROPEEN

(11) **EP 2 559 612 A1**
(43) Date de publication de la demande: **20.02.2013**
(21) Numéro de dépôt: 12290273.7
(22) Date de dépôt: 16.08.2012
(51) Int. Cl.: B62J 17/06

(54) **Tablier de protection d'un conducteur de véhicule ouvert et véhicule ouvert correspondant**

(30) Priorité: 19.08.2011 FR 1102546
(71) Demandeur: Holding Trophy, 78420 Carrières sur Seine (FR)
(72) Inventeur: Mallot, Thomas, 61600 Saint Georges d'Annebecq (FR); Amiot, Cyril, 61220 La Coulonche (FR)
(74) Mandataire: Plaçais, Jean Yves

(57) **Abrégé**

L'invention concerne un tablier de protection (3) d'un conducteur de véhicule ouvert comprenant une nappe supérieure (31) propre à recouvrir les cuisses du conducteur, une nappe inférieure (32) liée à la nappe supérieure (31) propre à recouvrir les jambes du conducteur. Le tablier (3) comprend deux panneaux latéraux (33, 34) liés respectivement à chaque côté de la nappe supérieure (31). Le tablier comprend au moins une fixation (35) liée à l'une des nappes (31, 32) ou à l'un des panneaux latéraux (33, 34). Les nappes supérieure (31) et inférieure (32) sont étanches, élastiques et extensibles. Les panneaux latéraux présentent une élasticité et une extensibilité inférieures à celles des nappes supérieure et inférieure.

## Description

L'invention concerne le secteur des véhicules ouverts, et plus particulièrement les motocyclettes, cyclomoteurs et analogues. Elle concerne plus particulièrement un dispositif de protection du conducteur de ce type de véhicules contre les intempéries.

Le secteur des véhicules ouverts est en pleine croissance. Le nombre et la diversité des véhicules ouverts sont en constante augmentation. Les dispositifs de protection existants étant spécifiquement adaptés aux véhicules, le nombre de modèles de ce type de protection est sensiblement proportionnel au nombre de modèles de véhicules existants auxquels ils sont destinés. L'adaptation de chaque tablier de protection aux formes et dimensions de chaque véhicule est telle qu'il est difficile, voire impossible, d'utiliser un tablier de protection sur un modèle de véhicule non prévu initialement.

Il est souhaitable de proposer des dispositifs de protection présentant une efficacité contre les intempéries. Il est souhaitable d'améliorer la protection, sans gêner les mouvements et le sentiment de liberté du pilote que procure ce type de véhicule, autrement dit sans nuire au confort du pilote ainsi qu'à l'espace disponible à l'intérieur du tablier. À cet effet, il est connu de fixer, sur la partie avant d'un scooter, un tablier de protection qui s'étend sur les jambes et le ventre du pilote, pour le protéger de l'écoulement de l'eau et du flux d'air, de plus en plus froid avec la vitesse.

Plus généralement, on connait un tablier de protection pour protéger des intempéries, le conducteur d'un véhicule découvert, tel qu'un véhicule à deux, trois ou quatre roues ou tout autre véhicule. Le tablier de protection comprend une nappe souple propre à recouvrir en partie le corps du conducteur.

Les côtés ou flancs du tablier tendent à flotter de chaque côté du pilote, derrière la partie avant du tablier, montée sur le carénage du véhicule. Aérodynamiquement parlant, cette zone est une zone de turbulence, d'autant plus forte que la vitesse augmente. Il en résulte un effet « drapeau » au niveau du tablier, c'est-à-dire que les côtés du tablier se comportent à la manière d'un drapeau dans un fort courant d'air. Ainsi, à partir de 80 km/heure, les côtés du tablier ondulent de plus en plus fort et claquent sur les jambes du pilote, ce qui est fort désagréable et peut même compromettre le pilotage du véhicule, voire devenir rédhibitoire.

La Demanderesse a proposé des moyens de rigidification du tablier afin d'éviter les battements lorsque le véhicule roule. Un tel système est décrit dans le document FR 2949428. Ce dispositif a donné satisfaction.

La Demanderesse a poursuivi ses recherches, et identifié un inconvénient des dispositifs existants : pour s'ajuster au mieux aux véhicules, les tabliers existants présentent des formes et des dimensions spécifiquement adaptés à chaque modèle de véhicules. L'utilisation d'un tablier en combinaison avec un véhicule pour lequel le tablier n'a pas spécifiquement été conçu est possible mais présente des performances sensiblement réduites. L'utilisation d'un tablier prévu pour un véhicule de petites dimensions, par exemple un scooter de petite cylindrée, est impossible sur un véhicule de plus grandes dimensions, par exemple un scooter de grosse cylindrée.

L'invention vient améliorer la situation.

Un tablier de protection d'un conducteur de véhicule ouvert comprend une nappe supérieure propre à recouvrir les cuisses du conducteur, une nappe inférieure liée à la nappe supérieure propre à recouvrir les jambes du conducteur, deux panneaux latéraux liés respectivement à chaque côté de la nappe supérieure, au moins un moyen de fixation au véhicule lié à l'une des nappes ou à l'un des panneaux latéraux. Les nappes supérieure et inférieure sont étanches, élastiques et extensibles. Lesdits panneaux latéraux présentent une élasticité et une extensibilité inférieures à celles des nappes supérieure et inférieure. Le tablier de protection et notamment les nappes supérieure et inférieure, peuvent être déformés pour s'adapter à divers véhicules et morphologies de conducteurs. Les performances de protection météorologique sont préservées. L'encombrement du tablier à l'état démonté est réduit. À l'état monté, le maintien du tablier contre le véhicule et contre le conducteur est assuré en partie par la force de rappel des nappes dans un état tendu.

L'invention vise également un véhicule ouvert sur lequel est fixé un tablier tel que décrit ci-dessus au moyen d'au moins un moyen de fixation.

Dans ce qui suit, on entend par véhicule ouvert un véhicule à au moins deux roues comprenant les motocyclettes et cyclomoteurs, les tricycles - à roues réparties deux à l'avant et une à l'arrière ou une à l'avant et deux à l'arrière - et les quads, notamment à quatre roues ou plus.

Les nappes supérieure et inférieure comprennent deux dimensions principales, dites longueur, dans la direction avant-arrière du véhicule, et largeur, dans la direction gauche-droite du véhicule, supérieures de plusieurs ordres de grandeur à la troisième dimension, l'épaisseur. Les notions d'élastique et d'extensible à propos des nappes supérieure et inférieure sont à comprendre selon des directions étant des combinaisons des directions des deux dimensions principales, par opposition à la direction selon l'épaisseur. Les notions d'avant, arrière, droite, gauche, haut, bas, etc. sont données par rapport à un tablier de protection à l'état monté sur un véhicule ouvert et ce par rapport au sens d'avancement du véhicule.

D'autres caractéristiques et avantages de l'invention apparaitront à l'examen de la description détaillée ci-après et des dessins annexés, donnés à titre nullement limitatif et sur lesquels :
- la figure 1 est une vue schématique générale en perspective d'un tablier de protection ;
- la figure 2 est une vue schématique d'un tablier de protection monté sur un scooter à l' arrêt ; et
- la figure 3 est une vue schématique d'un tablier de protection monté sur un scooter ;
- la figure 4 est une vue schématique d'un tablier de protection vu depuis son côté gauche.

Les dessins annexés sont pour l'essentiel de caractère certain, et pourront non seulement servir à compléter l'invention, mais aussi contribuer à sa définition, le cas échéant.

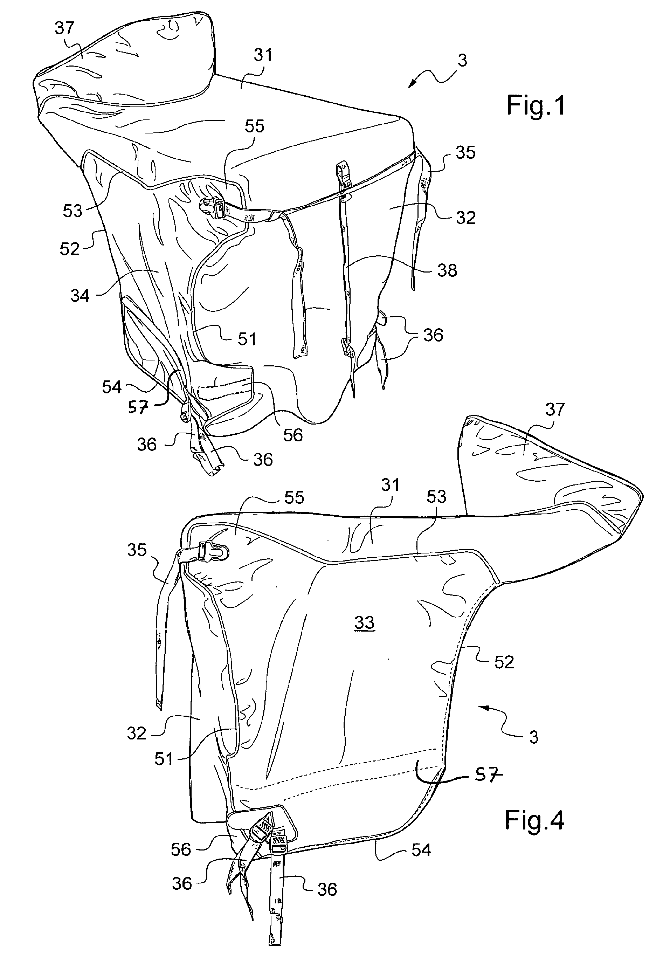

Un tablier de protection 3, représenté en figures 1 et 4, comprend une nappe supérieure 31, une nappe inférieure 32, un panneau latéral gauche 33, un panneau latéral droit 34, des sangles 35, 36, de fixation et une sangle de rangement 38.

Une bordure avant de la nappe supérieure 31 est raccordée à une bordure haute de la nappe inférieure 32. Les nappes supérieure 31 et inférieure 32 sont, dans l'exemple décrit ici, une pièce monobloc. Les nappes supérieure 31 et inférieure 32 sont élastiques et extensibles. Les nappes supérieure 31 et inférieure 32 présentent une structure et un matériau étanches. Les nappes supérieure 31 et inférieure 32 sont extensibles et élastiques. Les nappes supérieure 31 et inférieure 32 comprennent un matériau élastique, par exemple du polychloroprène, vendu sous la marque néoprène ®, ou de l'isoprène. Les nappes supérieure 31 et inférieure 32 présentent, ici, une épaisseur comprise entre 1 et 6 mm et de préférence entre 2 et 4 mm. Les nappes supérieure 31 et inférieure 32 ont subies un traitement dit « déperlant », c'est-à-dire qu'une couche superficielle d'une substance hydrofuge a été appliquée sur les nappes supérieure 31 et inférieure 32. Les nappes supérieure 31 et inférieure 32 sont alors hydrophobes, et éventuellement oléophobes, ce qui facilite le glissement des liquides à leur surface.

Les panneaux latéraux 33 et 34 comprennent un matériau et une structure étanches. Les panneaux latéraux 33 et 34 comprennent, dans l'exemple décrit ici, du PVC. En variantes, les panneaux latéraux 33 et 34 comprennent du nylon, du polyuréthane ou une combinaison de ces matériaux. Les panneaux latéraux 33 et 34 comprennent, ici, une feuille en PVC enveloppée dans un tissu souple, imperméable. Les panneaux latéraux 33 et 34 comprennent, ici, des renforts en mousse de polyéthylène fixés aux feuilles. Les panneaux latéraux 33 et 34 sont peu extensibles. Les panneaux latéraux 33 et 34 sont peu déformables élastiquement. Les renforts confèrent de la rigidité aux panneaux latéraux 33 et 34. Par rigidité, on entend ici que les panneaux latéraux 33 et 34 ont une tenue mécanique suffisante pour avoir une forme prédéterminée à l'état libre ou soumis au frottement de l'air, tout en étant suffisamment souples pour être pliés/roulés à la main. Le tissu souple enveloppant les feuilles et les renforts facilite l'assemblage, notamment par couture, avec la nappe supérieure 31 et la nappe inférieure 32.

Chacun des panneaux latéraux 33 et 34 présente une forme générale rectangulaire, cf. figure 4. Un panneau latéral 33, 34 comprend un bord avant 51, un bord arrière 52, un bord haut 53 et un bord bas 54. Le bord arrière 52 et le bord bas 54 sont raccordés ensembles sensiblement à angle droit et par l'intermédiaire d'un congé de raccordement. Le bord bas 54 est sensiblement en correspondance de forme avec le véhicule 2. Le bord haut 53 et le bord avant 51 sont chacun concaves. Le bord haut 53 présente une forme sensiblement en « V » ou échancrée. Le raccordement du bord haut 53 et du bord avant 51 forme une langue supérieure 55 s'étendant vers l'avant. Le raccordement du bord avant 51 et du bord bas 54 forme une langue inférieure 56 s'étendant vers l'avant.

Les panneaux latéraux 33 et 34 comprennent en outre une barre 57 de structure. La barre 57 est, ici, en métal, par exemple de l'aluminium. La barre 57 est disposée entre les feuilles et le tissu enveloppant. La barre 57 est disposée sensiblement parallèlement au bord bas 54 et à quelques centimètres, par exemple entre 5 et 15 cm, de celui-ci. La portion d'extrémité avant de la barre 57 est coudée vers l'intérieur du véhicule 2 et fixée à la langue inférieure 56. La barre 57 empêche la partie basse du panneau latéral 33, 34 de se plaquer excessivement contre le véhicule 2. Le conducteur 4 peut ainsi plus aisément retirer et repositionner ses pieds sur les cale-pieds du véhicule 2, le tablier 3 étant disposé à distance du carénage. Par exemple, lors d'un arrêt nécessitant de poser au moins un pied au sol, le conducteur 4 extrait un pied par un écart en partie arrière basse du panneau latéral 33, 34 d'entre le tablier 3 et le véhicule 2. La barre 57 maintient ledit écart. La barre 57 est déformable plastiquement par le conducteur 4 qui peut ainsi adapter la forme de la barre 57 à souhait.

Les panneaux latéraux peuvent être munis, sur leur face externe, de surfaces réfléchissantes pour améliorer la visibilité du tablier 3 et donc de l'ensemble roulant 1.

Le panneau latéral gauche 33 est fixé, par une partie haute, à une bordure gauche de la nappe supérieure 31. Dans l'exemple décrit ici, la nappe supérieure 31 et le panneau latéral gauche 33 sont assemblés par couture, ou en variante, par soudage. Le panneau latéral gauche 33 est fixé, par une partie avant, à une bordure gauche de la nappe inférieure 32. L'assemblage du panneau latéral gauche 33 et de la nappe inférieure 32 est réalisé par couture. La fixations entre les panneaux latéraux 33, 34 et la nappe supérieure 31 d'une part et la nappe inférieure 32 d'autre part, peut être réalisée à une distance, par exemple de quelques centimètres, des bords hauts 53 et des bords avant 51 des panneaux latéraux 33, 34.

Le panneau latéral droit 34 est sensiblement symétrique au panneau latéral gauche 33 par rapport à un plan longitudinal et vertical passant par le centre des nappes supérieure 31 et inférieure 32, c'est-à-dire un plan parallèle au plan de la figure 4.

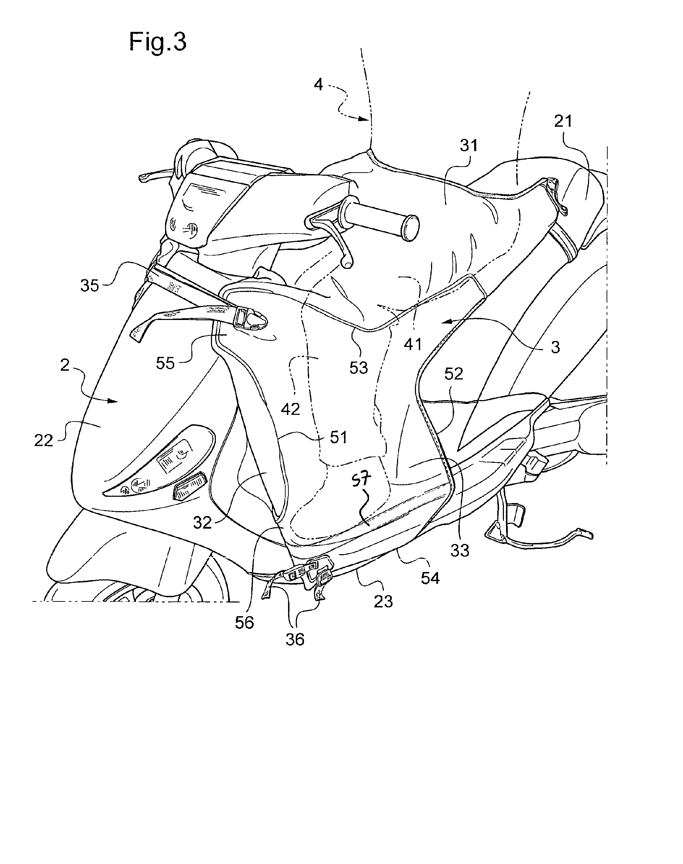

La figure 3 représente un tablier de protection 3 dans son contexte d'utilisation. Un ensemble roulant 1 comprend un véhicule ouvert 2 et un tablier de protection 3 conduit par un conducteur 4. Un véhicule ouvert 2, dans l'exemple décrit ici un scooter, comprend un siège 21 ou selle, une paroi avant 22 et un élément longitudinal bas 23. Le siège 21 est adapté pour accueillir le fessier d'un conducteur 4. Ici, la paroi avant 22 loge la colonne de direction et supporte le guidon du scooter 2. De manière générale, la paroi avant 22 peut désigner tout élément physique du véhicule 2 disposé sensiblement verticalement devant le conducteur 4 à l'état roulant et apte à servir de support pour une fixation 35. L'élément longitudinal bas 23 comprend, ici, une portion basse de châssis du véhicule 2. L'élément longitudinal bas 23 supporte, ici, un plancher adapté pour accueillir les pieds d'un conducteur 4. En variante, par exemple dans le cas d'une motocyclette, l'élément longitudinal bas 23 pourrait supporter en partie un moteur, des cale-pieds et/ou des pédales. De manière générale, l'élément longitudinal 23 peut désigner tout élément physique du véhicule 2 disposé sensiblement horizontalement au dessus du sol à l'état roulant et apte à servir de support pour fixation 36. Dans les exemples décrits ici, les fixations 35, 36 sont des sangles. En variante les fixations peuvent être, par exemple, des boutons pressions, des bandes auto-agrippantes ou des attaches adaptées pour coopérer avec des attaches complémentaires solidaires du véhicule 2.

Chacun des panneaux latéraux 33 et 34 présente une forme initiale généralement plane. Au montage, les panneaux latéraux 33 et 34 peuvent être déformés plastiquement, par exemple à la main, pour s'adapter au carénage du véhicule 4. En d'autres termes, les panneaux latéraux 33 et 34 présentent des propriétés choisies pour résister aux frottements de l'air à haute vitesse et à l'effet turbulent aérodynamique, tout en étant déformable à la main.

Le tablier de protection 3 comprend en outre un rabat 37. Le rabat 37 est, dans l'exemple décrit ici, une pièce de tissu souple imperméable. Le rabat 37 est fixé à une bordure arrière de la nappe supérieure 31. Le rabat 37 est, ici, cousu à une bordure arrière de la nappe supérieure 31.

Le tablier 3 comprend en outre une sangle de rangement 38, ici fixée à la nappe inférieure 32. La sangle de rangement 38 permet de maintenir le tablier 3 dans un état roulé et/ou plié à faible encombrement, par exemple pour un stockage. Pour replier le tablier 3, les deux panneaux latéraux 33, 34 sont rabattus l'un vers l'autre et contre la nappe inférieure 32. Puis, l'ensemble est roulé selon un axe sensiblement parallèle aux barres 57.

Une sangle de fixation 35 supérieure est assemblée aux panneaux latéraux 33 et 34. Deux extrémités de la sangle 35 supérieure sont, ici, cousues chacune sur les langues supérieures 55 de chacun des panneaux latéraux 33 et 34. Une sangle de fixation 36 inférieure est assemblée aux panneaux latéraux 33 et 34. Deux extrémités de la sangle 36 inférieure sont, ici, cousues chacune sur les surfaces externes des panneaux latéraux 33, 34 en léger retrait des langues inférieures 56. Une autre sangle inférieure 36 est fixée à proximité de la première sangle inférieure 36.

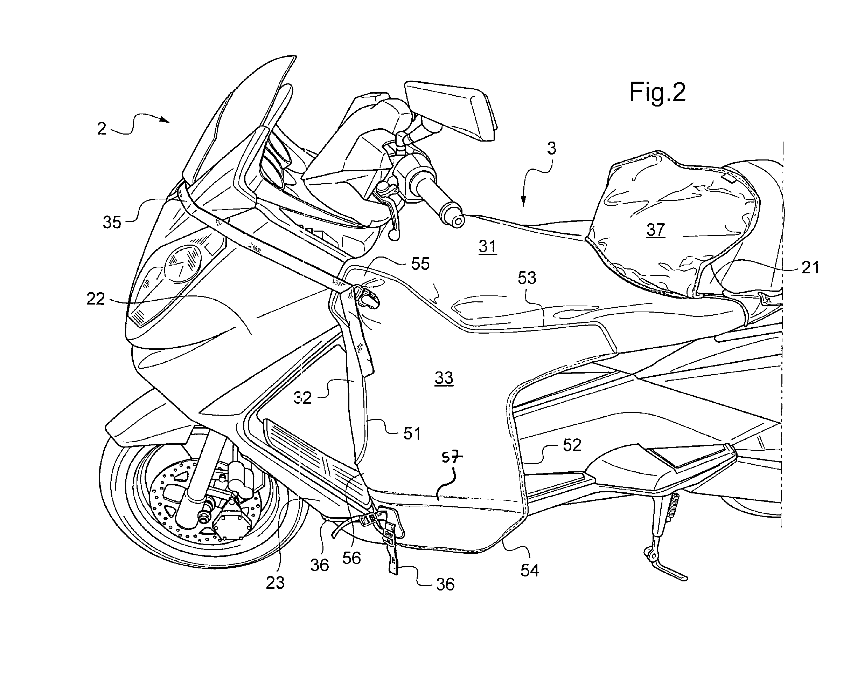

En l'absence de conducteur 4 et dans un état monté sur le véhicule ouvert 2, le tablier de protection 3 couvre partiellement le véhicule ouvert 2, cf. figure 2. La nappe supérieure 31 est disposée sensiblement horizontalement et au moins en partie au-dessus du siège 21 du véhicule 2. Les panneaux latéraux 33 et 34 s'étendent sensiblement verticalement de part et d'autre (à gauche et à droite) du véhicule ouvert 2. Les bords avant 51 sont disposés sensiblement à l'arrière de la paroi avant 22. Les bords bas 54 sont disposés de chaque côté de l'élément longitudinal bas 23. Les bords arrière 52 sont disposés contre le carénage du véhicule 2. Les bords hauts 53 sont disposés entre une partie haute de la paroi avant 22, ici sous le guidon, et une surface haute du siège 21.

Le rabat 37 s'étend sensiblement horizontalement, par exemple sensiblement aligne avec la nappe supérieure 31, au-dessus d'une partie arrière du siége 21 du véhicule ouvert 2. La nappe supérieure 31, les panneaux latéraux 33, 34 et le rabat 37 forment alors une house protectrice contre les intempéries pour le véhicule ouvert 2 à l'état arrêté, par exemple en stationnement.

La sangle de fixation 35 supérieure est disposée autour de la paroi avant 22 du véhicule 2. La sangle de fixation supérieure 35 maintien les panneaux latéraux 33 et 34 plaqués contre le véhicule 2 par l'intermédiaire des langues supérieures 55. Les langues supérieures 55 sont en partie repliées contre une surface avant de la paroi avant 22. La disposition des langues supérieures 55 entre la surface avant extérieure de la paroi avant 22 et les extrémités de la sangle de fixation supérieure 35 permet de limiter les risques de rayure de la carrosserie par la sangle de fixation 35. Les sangles de fixations 36 inférieures sont disposées autour de l'élément longitudinal bas 23 du véhicule 2. Les sangles de fixation inférieures 36 maintiennent les panneaux latéraux 34 et 35 plaqués contre le véhicule 2. Les langues inférieures 56 sont repliées vers l'intérieur du véhicule 2 contre une surface arrière de la paroi avant 22 et maintenues en partie par les barres 57. La première des sangles inférieures 36 limite le déplacement longitudinal (avant-arrière) du tablier 3. La seconde des sangles inférieures 36 limite le déplacement vertical (du haut vers le bas) du tablier 3. Le repli des langues inférieures 56 réduit le risque de pénétration d'air lors de l'avancée du véhicule 2, réduisant un effet « parachute » du tablier 3 en mouvement.

À l'état démonté, la nappe inférieure 32 est détendue et de largeur strictement inférieure à une largeur du véhicule 2. À l'état monté sur le véhicule 2, la nappe inférieure 32 est disposée sensiblement verticalement à l'arrière de la paroi avant 22 du véhicule ouvert 2. La nappe inférieure 32 est de largeur sensiblement identique à la largeur du véhicule 2. La nappe inférieure 32 est tendue au moins dans une direction de la largeur du véhicule 2. En variante, d'autres sangles de fixation peuvent être ajoutées au tablier 3 pour la fixation.

Dans un état monté, la nappe supérieure 31 et la nappe inférieure 32 subissent un étirement élastique dans la direction de la largeur, c'est-à-dire dans une direction droite-gauche, de sorte qu'une force de rappel des nappes supérieure 31 et inférieure 32 plaquent chacun des panneaux latéraux 33 et 34 contre les flancs du véhicule ouvert 2. Ladite force de rappel tend à rapprocher mutuellement les panneaux latéraux 33 et 34. Les dimensions en largeur des nappes supérieure 31 et inférieure 32, à l'état libre, sont choisies inférieures à la largeur du carénage des véhicules ouverts 2, par exemple la partie la plus large de la paroi avant 22. Pour une adaptation à des véhicules ouverts 2 de différentes largeurs, la largeur des nappes supérieure 31 et inférieure 32 sont choisies inférieures à la largeur du plus petit des véhicules ouverts 2. L'extensibilité des nappes supérieure 31 et inférieure 32 autorise des déformations réversibles des nappes supérieure 31 et inférieure 32. Lesdites déformations permettent une adaptation du tablier de protection 3 à des dimensions variées de véhicules ouverts 2, par exemple des scooters de cylindrée comprise entre 49 et 800 cm³.

À l'état monté sur le véhicule ouvert 2, les nappes supérieure 31 et inférieure 32 sont tendues au moins dans la direction de la largeur du véhicule 2. Les nappes supérieure 31 et inférieure 32 présentent des largeurs sensiblement identiques à la largeur du véhicule ouvert 2 sur lequel elles sont montées.

L'extensibilité des nappes supérieure 31 et inférieure 32 confère aux nappes supérieure 31 et inférieure 32, à l'état monté sur le véhicule 2, une forme épousant la forme d'une partie, par exemple le carénage de la paroi avant 22, du véhicule 2.

En présence d'un conducteur 4, et à l'état monté sur le véhicule ouvert 2, le tablier de protection 3 est fixé sur le véhicule 2, sensiblement de la même manière qu'en l'absence du conducteur 4. La nappe supérieure 31 recouvre au moins en partie les cuisses 41 du conducteur 4 au lieu de recouvrir le siège 21 du véhicule 2. La nappe inférieure 32 est disposée devant les jambes 42 du conducteur 4. La nappe supérieure 31 est plus tendue et présente une largeur supérieure à l'état monté en présence d'un conducteur 4 par rapport à un état monté sur le même véhicule ouvert 2 en l'absence de conducteur 4. L'extensibilité des nappes supérieure 31 et inférieure 32 confère aux nappes supérieure 31 et inférieure 32 une forme épousant la forme d'une partie du véhicule ouvert 2 et d'une partie des membres inférieurs 41, 42 du conducteur 4. Le rabat 37 s'applique contre l'abdomen du conducteur 4 de manière à conférer une protection supplémentaire.

À l'état monté, en présence ou en l'absence d'un conducteur 4, les nappes supérieure 31 et inférieure 32 présentent un matériau et une structure étanches dans un état sous contrainte et sous un allongement relatif, selon au moins une de leurs directions principales. La valeur de l'allongement relatif par rapport à un état sans contrainte peut être par exemple compris entre 40 et 60 % et de préférence environ 50 %.

Le tablier de protection peut s'adapter à un nombre important de véhicules ouverts, par exemple des scooters, motocyclettes et motocycles de dimensions et de cylindrées variables. L'extensibilité et l'élasticité des nappes supérieure et inférieure confèrent au tablier une adaptabilité importante pour coïncider avec le carénage de chacun des véhicules visés. L'utilisation de sangles permet une adaptabilité importante, sans présenter de risque important de dégradation du carénage du véhicule. Le conducteur en déplacement, ou le siège du conducteur à l'état stationné, sont ainsi protégés des intempéries par le tablier de protection. Le tablier de protection réduit la sensation de froid au niveau des membres inférieurs du conducteur lors de déplacements à vitesse élevée. L'invention permet donc une adaptabilité importante en fonction de la variété des véhicules ouverts tout en ayant des qualités de protection du tablier satisfaisantes.

L'invention concerne aussi un véhicule ouvert sur lequel est fixé un tablier tel que décrit précédemment au moyen d'au moins une fixation.

L'invention ne se limite pas aux exemples d'appareils décrits ci-avant, seulement à titre d'exemples, mais elle englobe toutes les variantes que pourra envisager l'homme de l'art dans le cadre des revendications ci-après.

## Revendications

1. Tablier de protection (3) d'un conducteur (4) de véhicule (2) ouvert **caractérisé en ce qu'**il comprend une nappe supérieure (31) propre à recouvrir les cuisses (41) du conducteur (4), une nappe inférieure (32) liée à la nappe supérieure (31) propre à recouvrir les jambes (42) du conducteur (4), deux panneaux latéraux (33, 34) liés respectivement à chaque côté de la nappe supérieure (31), au moins une fixation (35) lié à l'une des nappes (31, 32) ou à l'un des panneaux latéraux (33, 34), les nappes supérieure (31) et inférieure (32) étant étanches, élastiques et extensibles, lesdits panneaux latéraux (33, 34) présentant une élasticité et une extensibilité inférieures à celles des nappes supérieure et inférieure (31, 32).

2. Tablier de protection selon la revendication 1, dans lequel la nappe inférieure (32) est détendue et de largeur strictement inférieure à une largeur du véhicule (2) à l'état démonté, la nappe inférieure (32) étant tendue au moins dans une direction de la largeur du véhicule (2) et de largeur sensiblement identique à la largeur du véhicule (2) à l'état monté sur le véhicule (2).

3. Tablier selon l'une des revendications précédentes, dans lequel, à l'état monté sur le véhicule (2), les deux panneaux latéraux (33, 34) sont soumis à une force de rappel tendant à rapprocher mutuellement les deux panneaux latéraux (33, 34) et permettant de plaquer chacun des panneaux latéraux (33, 34) contre la véhicule (2).

4. Tablier selon l'une des revendications précédentes, comprenant en outre un rabat (37) fixé à la nappe supérieure (31) du côté opposé à la nappe inférieure (32).

5. Tablier selon l'une des revendications précédentes, dans lequel les panneaux latéraux (33, 34) comprennent du PVC.

6. Tablier selon l'une des revendications précédentes, dans lequel les panneaux latéraux (33, 34) comprennent chacun au moins une langue (55) s'étendant vers l'avant, sur laquelle au moins une fixation (35) est assemblée.

7. Tablier selon l'une des revendications précédentes, dans lequel au moins l'une des nappes supérieure (31) et inférieure (32) présente un matériau et une structure étanches.

8. Tablier selon l'une des revendications précédentes, dans lequel au moins l'une des nappes supérieure (31) et inférieure (32) comprend du néoprène.

9. Tablier selon l'une des revendications précédentes, dans lequel la nappe supérieure (31) et la nappe inférieure (32) sont monoblocs.

10. Tablier selon l'une des revendications précédentes, dans lequel au moins l'une des nappes supérieure (31) et inférieure (32) présente un matériau et une structure étanches dans un état sous contrainte et sous un allongement relatif de 40 à 60 %, selon au moins l'une de ses directions principales, par rapport à un état sans contrainte.

11. Véhicule (2) ouvert sur lequel est fixé un tablier (3) selon l'une des revendications précédentes au moyen d'au moins une fixation (35).
